(19) Europäisches Patentamt
European Patent Office
Office européen des brevets

(11) **EP 4 187 443 A1**

(12) # EUROPEAN PATENT APPLICATION

(43) Date of publication:
**31.05.2023 Bulletin 2023/22**

(21) Application number: **22190752.0**

(22) Date of filing: **17.08.2022**

(51) International Patent Classification (IPC):
**G06N 3/0495** (2023.01)     **G06N 3/082** (2023.01)

(52) Cooperative Patent Classification (CPC):
**G06N 3/082; G06N 3/0495;** G06N 3/043

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.11.2021 JP 2021191164**

(71) Applicant: **FUJITSU LIMITED**
**Kawasaki-shi, Kanagawa 211-8588 (JP)**

(72) Inventors:
• **Iwakawa, Akinori**
**Kawasaki-shi, Kanagawa, 211-8588 (JP)**
• **Tabaru, Tsuguchika**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MODEL REDUCTION PROGRAM, MODEL REDUCTION APPARATUS, AND MODEL REDUCTION METHOD**

(57)    A model reduction program that causes at least one computer to execute a process, the process includes identifying as deletion targets a first neuron that does not connect to an input layer in a neural network; identifying as deletion targets a second neuron that does not connect to an output layer in a neural network; combining a bias of the first neuron with a bias of a third neuron connected to the first neuron on an output side; and deleting the first neuron and the second neuron from the neural network.

## FIG. 1

PARAMETER TABLE

```
                10

    ┌──────────────────┐ 12
    │  CORRECTION UNIT  │
    └──────────────────┘

    ┌──────────────────┐ 14
    │ COMPENSATION UNIT │
    └──────────────────┘

    ┌──────────────────┐ 16
    │   DELETION UNIT   │
    └──────────────────┘
```

PARAMETER TABLE AFTER
REDUCTION

## Description

FIELD

The technique disclosed herein is related to a model reduction program, a model reduction apparatus, and a model reduction method.

BACKGROUND

A machine learning model (hereafter, also simply referred to as a "model") tends to increase in size due to, for example, evolution of the deep learning technique. As the size of a model increases, computing resources such as a memory and a processor desired for machine learning also significantly increase. Meanwhile, mobile devices and other environments that desire the deep learning technique tend to diversify. Although a huge model is desired at the start of machine learning, there may be a case where the number of parameters finally desired for inference is not many as a result of the machine learning. Accordingly, in order to address the above-described tendency, a model size-reduction technique has become widely noticed in which machine learning of a model is executed in an environment having a large amount of computing resources such as a server and the like, and the size-reduced model obtained by deleting unwanted parameters is used for inference.

For example, there has been proposed a method of correcting a configuration of a fuzzy inference model in which, when the fuzzy inference model is created, meaningless input and output parameters are deleted and operation time by the fuzzy inference model is decreased. According to this method, arbitrary input data is given to the fuzzy inference model, corresponding output data is calculated, a plurality of sets of pieces of pseudo data are created, and a neural network having input and output parameters common to those of the fuzzy inference model is configured. According to this method, the pseudo data is given as teacher data to determine a characteristic value of the neural network, and this neural network is used to calculate the degree of influence of each input parameter on each output parameter. According to this method, input parameters having a small degree of influence on any output parameter and output parameters influenced in a small degree by any input parameter are extracted. According to this method, the extracted input/output parameters are deleted from the input/output parameters of the fuzzy inference model, thereby to correct the fuzzy inference model.

Japanese Laid-open Patent Publication No. 2000-322263 is disclosed as related art.

SUMMARY

[TECHNICAL PROBLEM]

However, when only parameters the degree of influence of which is small are deleted as in the related-art model size-reduction technique, useless parameters may remain due to the configuration of a network. In this case, calculation efficiency of inference by the generated model decreases. When parameters the influence of which is small are simply deleted, information useful for inference may be lost, and accuracy of the model after the deletion of the parameters may degrade.

In one aspect, an object of the disclosed technique is to improve an effect of size reduction of a machine learning model while suppressing degradation in accuracy of the machine learning model.

[SOLUTION TO PROBLEM]

According to an aspect of the embodiments, an model reduction program that causes at least one computer to execute a process, the process includes identifying as deletion targets a first neuron that does not connect to an input layer in a neural network; identifying as deletion targets a second neuron that does not connect to an output layer in a neural network; combining a bias of the first neuron with a bias of a third neuron connected to the first neuron on an output side; and deleting the first neuron and the second neuron from the neural network.

[ADVANTAGEOUS EFFECTS OF INVENTION]

In the one aspect, an effect is obtained in which the effect of the size reduction of the machine learning model may be improved while suppressing degradation in the accuracy of the machine learning model.

BRIEF DESCRIPTION OF DRAWINGS

FIG. 1 is a functional block diagram of a model reduction apparatus;
FIG. 2 is a diagram for explaining an example of an existing model size-reduction technique;
FIG. 3 is a diagram for explaining a problem with the existing model size-reduction technique;
FIG. 4 is a diagram for explaining a notation of weights between neurons;
FIG. 5 is a diagram illustrating an example of a parameter table;
FIG. 6 is a diagram for explaining identification of a deletion-target neuron and bias compensation;
FIG. 7 is a diagram for explaining deletion of a parameter;
FIG. 8 is a block diagram schematically illustrating the configuration of a computer that functions as the model reduction apparatus;
FIG. 9 is a flowchart illustrating an example of a model reduction process;
FIG. 10 is a flowchart illustrating an example of a forward weight correction process;

FIG. 11 is a flowchart illustrating an example of a backward weight correction process;

FIG. 12 is a flowchart illustrating an example of a deletion process;

FIG. 13 is a diagram illustrating an examples of a layer information table and a function table;

FIG. 14 is a diagram illustrating examples of a layer information table and a parameter table for a neural network including a convolution layer;

FIG. 15 is a diagram for explaining deletion of parameters in a case where a neural network including a convolution layer is a target;

FIG. 16 is a diagram illustrating an example of a layer configuration of the neural network;

FIG. 17 is a diagram for explaining the relationship between accuracy and size reduction of a model;

FIG. 18 is a diagram illustrating an example of layer-to-layer data sizes in a case where a reduction rate is 90%; and

FIG. 19 is a diagram illustrating an example of layer-to-layer data sizes in a case where a reduction rate is 98%.

DESCRIPTION OF EMBODIMENTS

Hereinafter, an example of an embodiment according to the disclosed technique will be described with reference to the drawings.

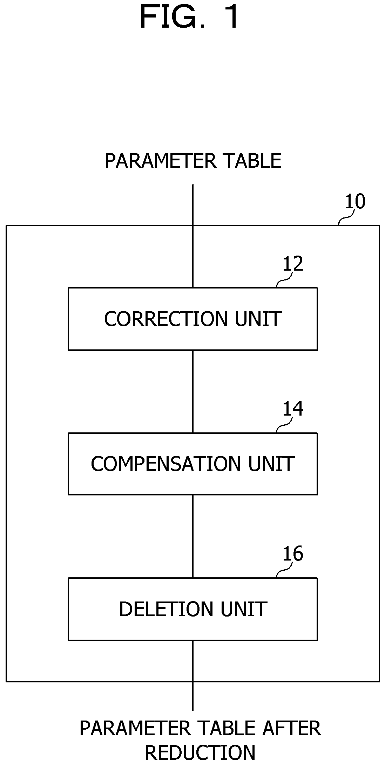

As illustrated in FIG. 1, a parameter table representing a neural network that is a machine learning model is input to a model reduction apparatus 10 according to the present embodiment. According to the present embodiment, the parameter table input to the model reduction apparatus 10 is a parameter table in which a subset of parameters is deleted by an existing model size-reduction technique.

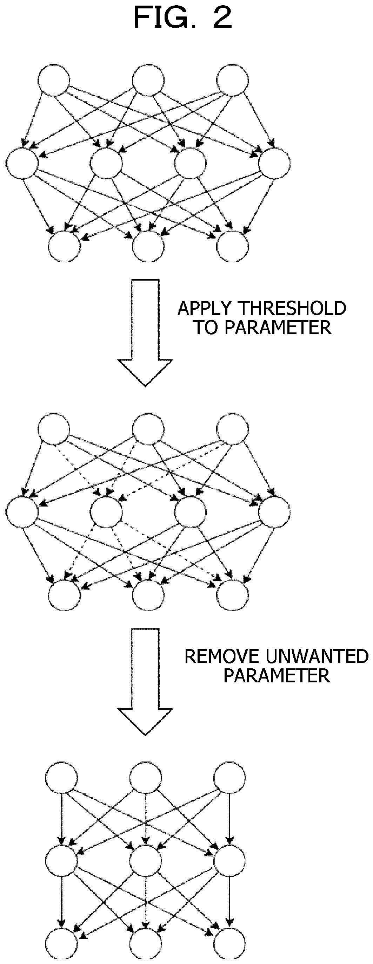

An example of the existing model size-reduction technique will be described with reference to FIG. 2. In FIG. 2, circles represent neurons of a neural network, and arrows represent couplings between the neurons. These representations are similarly used in the drawings to be referred to below. Weights that are parameters of the model are set at couplings between the neurons. For example, as illustrated in FIG. 2, according to the existing model size-reduction technique, a threshold is applied to weights, between neurons, that are parameters of the model for which the machine learning is executed, and weights smaller than or equal to the threshold are corrected to 0. A middle section of FIG. 2 illustrates that the weights, between neurons, represented by dashed arrows have been corrected to 0. As illustrated in a lower section of FIG. 2, according to the existing model size-reduction technique, a model is output in which the parameters are reduced by removing portions having the weight of 0 as unwanted parameters.

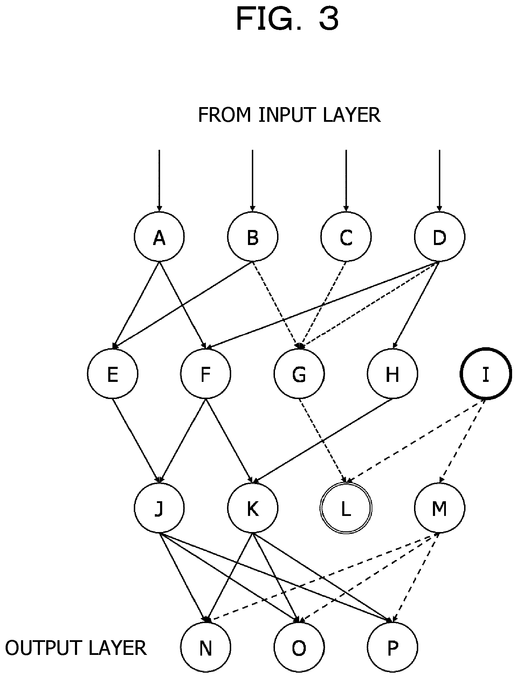

As illustrated in FIG. 3, in the case of a model reduced in size by the existing model size-reduction technique, in some cases, a neuron for which no input exists (a neuron I indicated by a thick circle in FIG. 3) and a neuron that is not used for output (a neuron L indicated by a double circle in FIG. 3) remain in the model. In this case, weights between neurons from the neuron without input to an output layer (weights in portions indicated by dashed arrows in FIG. 3) are unwanted parameters that are not used to calculate output of the model. Similarly, weights between neurons from an input layer to neurons not used for output (weights in portions indicated by dotted arrows in FIG. 3) are also unwanted parameters not used for the calculation of the output of the model.

Each neuron also has a bias as a parameter. For example, in a case where a value y output from a neuron is calculated by a simple linear function ($y = ax + b$), b is a bias term. Here, x is a value output from a neuron in a previous stage, and a is a weight between the neuron in the previous stage and a target neuron. The bias is a constant value that is obtained as a result of machine learning and does not depend on the input. In a case where a weight between a neuron (for example, I) for which input does not exist as described above and a neuron coupled, on the output side, to this neuron without input is simply deleted, a way for conveying information on the bias of the neuron without input to the neuron on the output side is lost. As a result, information useful for inference may be lost, and accuracy of the model after the size reduction may degrade.

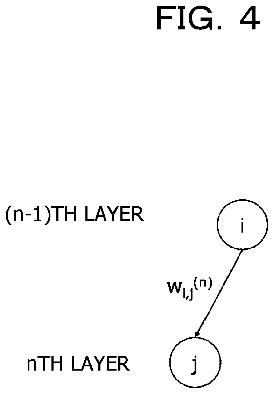

Thus, according to the present embodiment, the size of a model is reduced by deleting the parameters so that the effect of the model size reduction may be improved while suppressing degradation in the accuracy of the model. Hereinafter, a functional configuration of the model reduction apparatus 10 according to the present embodiment will be described in detail. Hereinafter, as illustrated in FIG. 4, in a case where a neuron i in an (n-1)th layer and a neuron j in an nth layer are in a coupling relationship, a weight between the neuron i and the neuron j is represented as "$w_{i,j}^{(n)}$ ". The weight $w_{i,j}^{(n)}$ is referred to as an output weight of the neuron i or an input weight of the neuron j. The bias of the neuron i is represented as "$b_i$". The output weight is an example of a "weight on an output side" in the disclosed technique, and the input weight is an example of a "weight on an input side" in the disclosed technique.

As illustrated in FIG. 1, the model reduction apparatus 10 functionally includes a correction unit 12, a compensation unit 14, and a deletion unit 16. The correction unit 12 is an example of an "identification unit" of the disclosed technique.

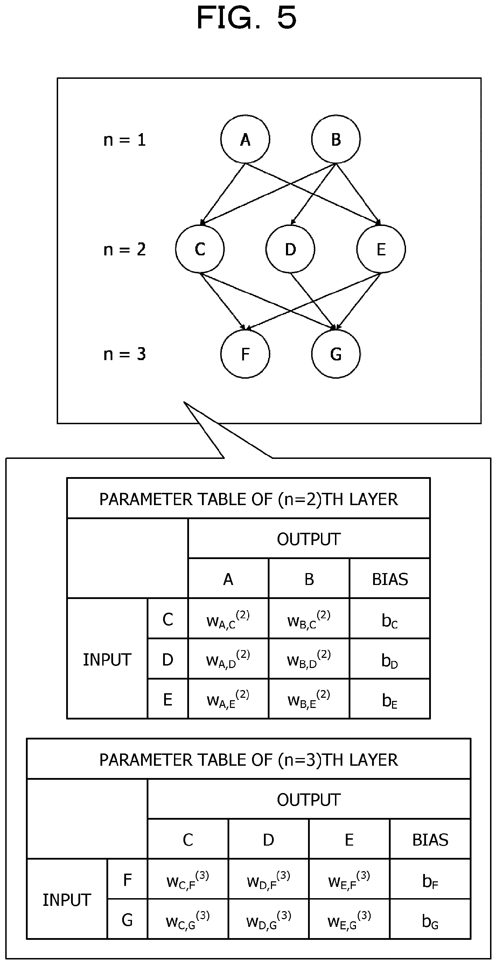

The correction unit 12 obtains parameter tables input to the model reduction apparatus 10. FIG. 5 illustrates examples of the parameter tables. The examples illustrated in FIG. 5 are parameter tables of a neural network represented by a graph representation as illustrated in an upper section of FIG. 5. As illustrated in FIG. 5, the parameter tables are provided on a layer-by-layer basis. As indicated by "INPUT" in FIG. 5, in the parameter table of each layer, neurons of the corresponding layer correspond to respective rows. As indicated by "OUTPUT" in FIG. 5, neurons of a higher layer than the corresponding layer, for example, the neurons output values of which are input to the neurons of the corresponding layer correspond to respective columns. Each element of a matrix stores a weight between the neurons corresponding to the row and the column of the element. For example, each row of the parameter table stores input weights of one of the neurons corresponding to the row, and each column of the parameter table stores output weights of one of the neurons corresponding to the column. The parameter table of each layer also stores the biases of the neurons of the corresponding layer at the end column of the rows.

In the neural network, the correction unit 12 identifies, as deletion targets, first neurons without a coupling from the input layer and second neurons without a coupling to the output layer. Then, in the parameter tables, the correction unit 12 corrects the output weights of the first neurons to 0 and the input weights of the second neurons to 0.

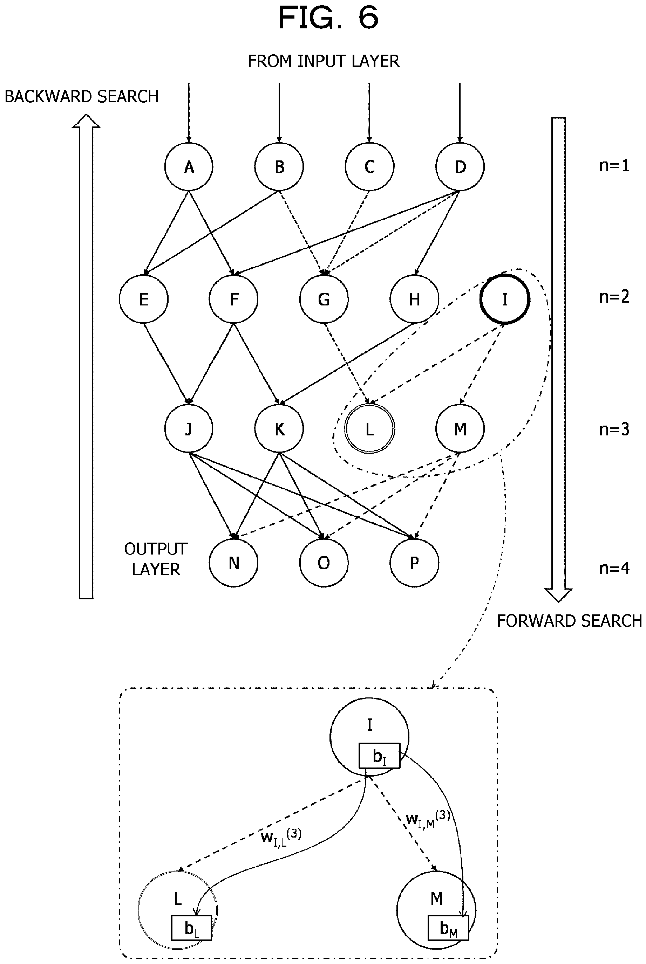

For example, as illustrated in FIG. 6, the correction unit 12 sequentially identifies the first neurons that are the deletion targets by forward search from the input layer toward the output layer in the neural network. For example, the correction unit 12 searches for neurons all the input weights of which are 0 sequentially from the input layer. In an example illustrated in FIG. 6, based on the fact that the row of the neuron I is entirely set to 0 in a parameter table of an (n=2)th layer, the correction unit 12 determines that all the input weights of the neuron I are 0 and identifies the neuron I as the deletion target. The correction unit 12 corrects all the output weights of the neuron I, for example, all the weights of the column of the neuron I in a parameter table of an (n=3)th layer to 0. The correction unit 12 sequentially searches for neurons all the input weights of which are 0 in the forward search, thereby to identify that all the input weights of the neuron M are 0 and correct all the output weights of the neuron M to 0 (dashed arrows in FIG. 6).

Similarly, as illustrated in FIG. 6, the correction unit 12 sequentially identifies the second neurons that are the deletion targets by backward search from the output layer toward the input layer in the neural network. For example, the correction unit 12 searches for neurons all the output weights of which are 0 sequentially from the output layer. In the example illustrated in FIG. 6, based on the fact that the column of the neuron L is entirely set to 0 in a parameter table of an (n=4)th layer, the correction unit 12 determines that all the output weights of the neuron L are 0 and identifies the neuron L as the deletion target. The correction unit 12 corrects all the input weights of the neuron L, for example, all the weights of the row of the neuron L in the parameter table of the (n=3)th layer to 0. The correction unit 12 sequentially searches for neurons all the output weights of which are 0 in the backward search, thereby to identify that all the output weights of a neuron G are 0 and correct all the input weights of the neuron G to 0 (dotted arrows in FIG. 6).

For the first neurons identified as the deletion targets in the forward search, the correction unit 12 notifies the compensation unit 14 so that the compensation unit 14 executes a process of compensating for the biases of the identified neurons.

Based on the notification from the correction unit 12, the compensation unit 14 compensates for biases of the first neurons as the deletion targets by combining the biases of the first neurons with biases of third neurons coupled to the first neurons on the output side. For example, the compensation unit 14 combines the biases by adding values obtained by multiplying the biases of the first neurons by the weights between the first neurons and the third neurons to the biases of the third neurons.

For example, a case is described in which the neuron I the bias of which is $b_I$ is identified as the deletion-target first neuron. As illustrated in a one-dot chain line portion of an upper section of FIG. 6 and a lower section of FIG. 6, the neuron I of the (n=2)th layer is coupled to each of the neuron L and the neuron M of the (n=3)th layer. A bias of the neuron L is $b_L$, a bias of the neuron M is $b_M$, a weight between the neuron I and the neuron L is $w_{I,L}^{(3)}$, and a weight between the neuron I and the neuron M is $w_{I,M}^{(3)}$. In this case, the compensation unit 14 calculates $b_L$ and $b_M$ as described below and updates the values of the column of the bias of the rows respectively corresponding to the neuron L and the neuron M in the parameter table of the (n=3)th layer.

$$b_L \;<\!\!-\; b_L + w_{I,L}^{(3)}b_I, \; b_M \;<\!\!-\; b_M + w_{I,M}^{(3)}b_I$$

The deletion unit 16 deletes the identified deletion-target neurons from the neural network. The input weights and the output weights of the deletion-target neurons are all 0 in the parameter tables. For example, the deletion unit 16 deletes rows and columns corresponding to the weights of the deletion-target neurons in the parameter tables. For example, in a case where the neuron i in the (n-1)th layer is the deletion target, the deletion unit 16 deletes the row of the neuron i all the weights of which are 0 in the parameter table of the (n-1)th layer and the column of the neuron i all the weights of which are 0 in the parameter table of the nth layer.

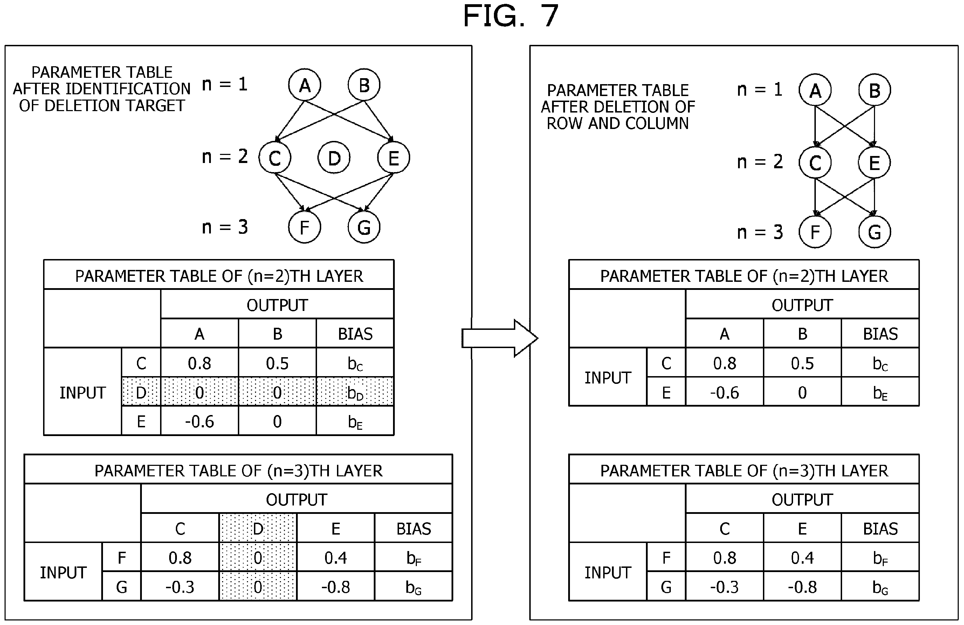

For example, as illustrated in a left section of FIG. 7, it is assumed that the neuron D of the (n=2)th layer is identified as the deletion-target neuron. In this case, the weights of the row of "D" of the parameter table of the (n=2)th layer and the weights of the column of "D" of the parameter table of the (n=3)th layer are 0. As illustrated in a right section of FIG. 7, the deletion unit 16 deletes the row of "D" of the parameter table of the (n=2)th layer and the column of "D" of the parameter table of the (n=3)th layer. Thus, the size of the parameter tables, for example, the size of the model is reduced. The deletion unit 16 outputs the size-reduced parameter tables.

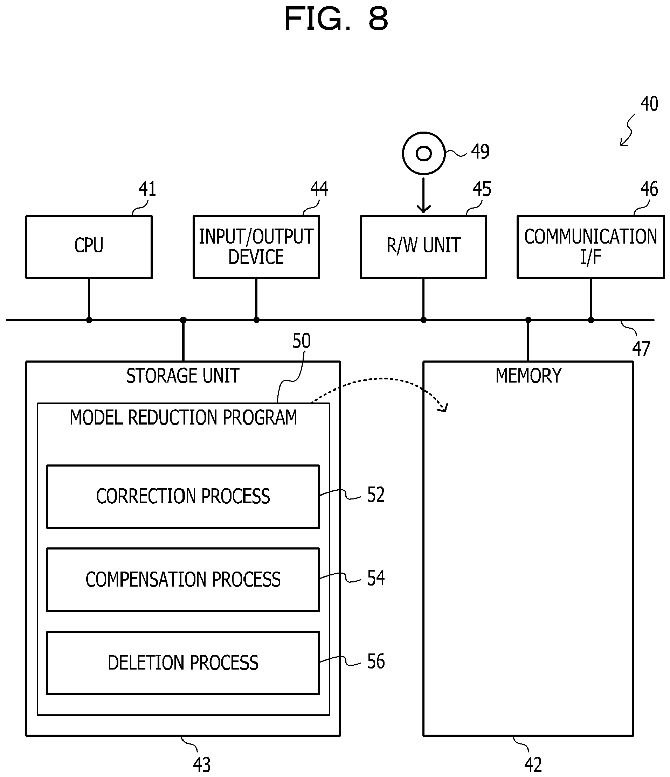

The model reduction apparatus 10 may be realized by using, for example, a computer 40 illustrated in FIG. 8. The computer 40 includes a central processing unit (CPU) 41, a memory 42 serving as a temporary storage area, and a nonvolatile storage unit 43. The computer 40 also includes an input/output device 44 such as an input unit, a display unit, and the like and a read/write (R/W) unit 45 that controls reading and writing of data from and to a non-temporary storage medium 49. The computer 40 also includes a communication interface (I/F) 46 that is coupled to a network such as the Internet. The CPU 41, the memory 42, the storage unit 43, the input/output device 44, the R/W unit 45, and the communication I/F 46 are coupled to each other via a bus 47.

The storage unit 43 may be realized by using a hard disk drive (HDD), a solid-state drive (SSD), a flash memory, or the like. The storage unit 43 serving as a storage medium stores a model reduction program 50 for causing the computer 40 to function as the model reduction apparatus 10. The model reduction program 50 includes a correction process 52, a compensation process 54, and a deletion process 56.

The CPU 41 reads the model reduction program 50 from the storage unit 43, loads the read model reduction program 50 on the memory 42, and sequentially executes the processes included in the model reduction program 50. The CPU 41 executes the correction process 52 to operate as the correction unit 12 illustrated in FIG. 1. The CPU 41 executes the compensation process 54 to operate as the compensation unit 14 illustrated in FIG. 1. The CPU 41 executes the deletion process 56 to operate as the deletion unit 16 illustrated in FIG. 1. Thus, the computer 40 that executes the model reduction program 50 functions as the model reduction apparatus 10. The CPU 41 that executes the program is hardware.

The functions realized by the model reduction program 50 may instead be realized by, for example, a semiconductor integrated circuit, in more detail, an application-specific integrated circuit (ASIC) or the like.

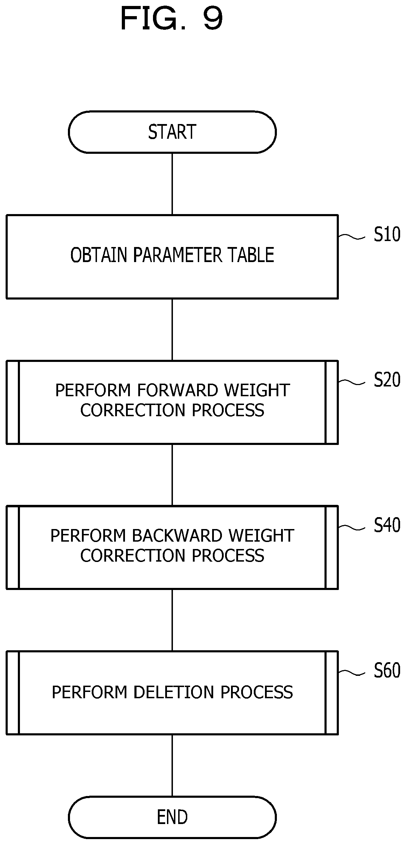

Next, operations of the model reduction apparatus 10 according to the present embodiment will be described. When parameter tables which represents a neural network and from which a subset of parameters have been deleted by using the existing model size-reduction technique are input to the model reduction apparatus 10, a model reduction process illustrated in FIG. 9 is executed in the model reduction apparatus 10. The model reduction process is an example of a method for model reduction of the disclosed technique.

In step S10, the correction unit 12 obtains parameter tables input to the model reduction apparatus 10. Next, in step S20, the correction unit 12 executes a forward weight correction process, identifies the first neurons without a coupling from the input layer as the deletion targets, and corrects the output weights of the first neurons to 0 in the parameter tables. In so doing, the compensation unit 14 executes the process of compensating for the biases of the first neurons. Next, in step S40, the correction unit 12 executes a backward weight correction process, identifies the second neurons without a coupling to the output layer as the deletion targets, and corrects the input weights of the second neurons to 0 in the parameter tables. Next, in step S60, the deletion unit 16 executes a deletion process to delete the deletion-target neurons from the neural network. Hereinafter, each of the forward weight correction process, the backward weight correction process, and the deletion process will be described in detail.

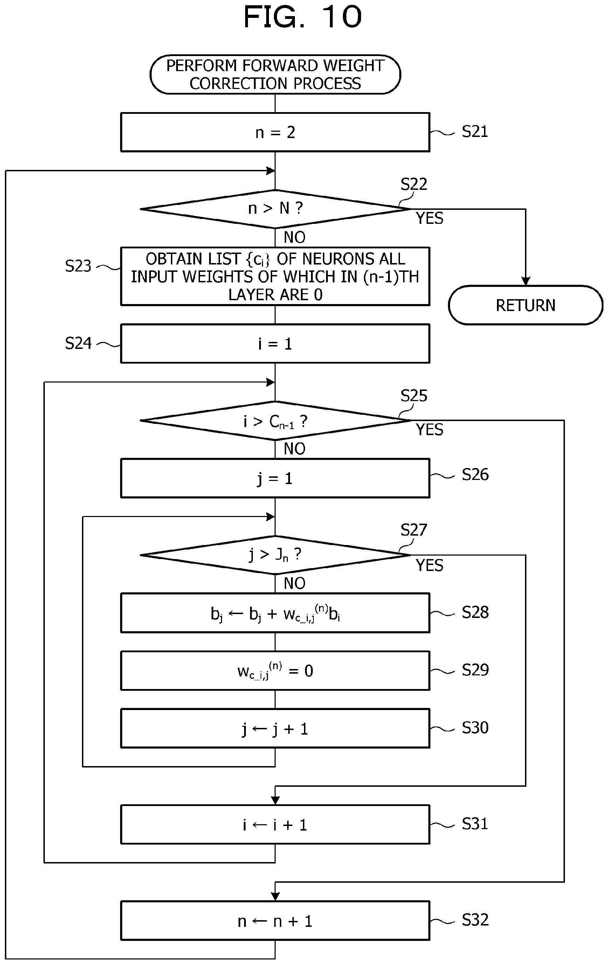

First, the forward weight correction process will be described with reference to FIG. 10.

In step S21, the correction unit 12 sets a variable n that identifies a hierarchical layer to be processed in the neural network to 2. Next, in step S22, the correction unit 12 determines whether n exceeds N representing the number of hierarchical layers of the neural network. In a case where n does not exceed N, the process proceeds to step S23.

In step S23, the correction unit 12 obtains a list $\{c_i\}$ of the neurons all the input weights of which are 0 in the $(n-1)$th layer. The number of the neuron in the $(n-1)$th layer is represented by i, and i = 1, 2, ..., $I_{n-1}$ ($I_{n-1}$ is the number of neurons in the $(n-1)$th layer). The numbers of the neurons all the input weights of which are 0 out of the neurons in the $(n-1)$th layer are represented by $c_i$. For example, the correction unit 12 adds the numbers of the neurons corresponding to the rows in which all the weights are 0 to the list in the parameter table of the $(n-1)$th layer and obtains $\{c_i\}$.

Next, in step S24, the correction unit 12 sets i to 1. Next, in step S25, the correction unit 12 determines whether i exceeds the maximum value $C_{n-1}$ of the numbers of the neurons included in the list $\{c_i\}$. In a case where i does not exceed $C_{n-1}$, the process moves to step S26. In step S26, the correction unit 12 sets j to 1. The number of the neurons in the nth layer is j, and j = 1, 2, ..., $J_n$ ($J_n$ is the number of neurons in the nth layer). Next, in step S27, the correction unit 12 determines whether j exceeds $J_n$. In a case where j does not exceed $J_n$, the process moves to step S28.

In step S28, the compensation unit 14 compensates for the bias of the ith neuron in the $(n-1)$th layer by combining the bias of the ith neuron in the $(n-1)$th layer with the bias of the jth neuron in the nth layer. For example, the compensation unit 14 calculates the bias of the jth neuron in the nth layer like $b_j \leftarrow b_j + w_{c\_i,j}^{(n)} b_i$ and updates the value in the column of the bias of the row corresponding to the jth neuron in the parameter table of the nth layer. Next, in step S29, the correction unit 12 deletes the output weight from the ith neuron in the $(n-1)$th layer to the jth neuron in the nth layer. For example, the correction unit 12 corrects the weight $w_{c\_i,j}$ stored in the parameter table of the nth layers to 0. Thus, both the input weight and the output weight of the ith neuron in the $(n-1)$th layer are 0. Although the notation "c_i" is dif-

ferent from $c_i$ for the reason of notation by using subscript, $c\_i = c_i$. This similarly applies to $c\_j$ to be described later.

Next, in step S30, the correction unit 12 increments j by one, and the process returns to step S27. In a case where j exceeds $J_n$ in step S27, the process moves to step S31. In step S31, the correction unit 12 increments i by one, and the process returns to step S25. In a case where i exceeds $C_{n-1}$ in step S25, the process moves to step S32. In step S32, the correction unit 12 increments n by one, and the process returns to step S22. In step S22, in a case where n exceeds N, the forward weight correction process ends, and the processing returns to the model reduction process (FIG. 9).

In a case where there is no coupling relationship between the ith neuron in the (n-1)th layer and the jth neuron in the nth layer, the processing in steps S28 and S29 described above is skipped. In a case where i is not included in the list $\{c_i\}$, for example, in a case where any of the input weights of the ith neuron in the (n-1)th layer is not 0, the processing in steps S27 to S30 described above is skipped. Then, in step S31 described above, the correction unit 12 may increment i by one, and the process may return to step S25.

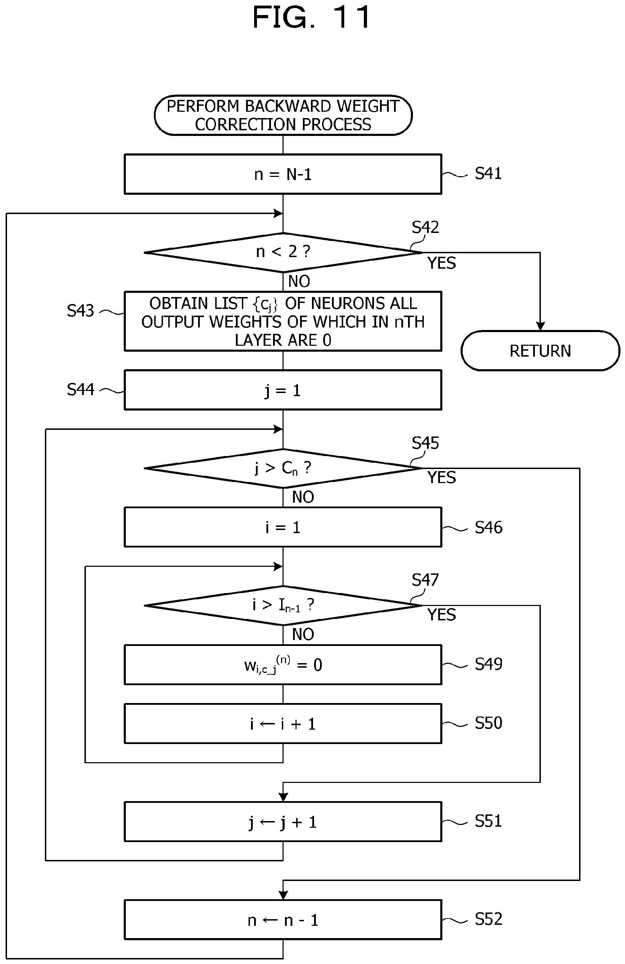

Next, the backward weight correction process will be described with reference to FIG. 11.

In step S41, the correction unit 12 sets the variable n that identifies a hierarchical layer to be processed in the neural network to N - 1. Next, in step S42, the correction unit 12 determines whether n is smaller than two. In a case where n is greater than or equal to two, the process moves to step S43.

In step S43, the correction unit 12 obtains a list $\{c_j\}$ of the neurons all the output weights of which are 0 in the nth layer. The numbers of the neurons all the output weights of which are 0 out of the neurons in the nth layer are represented by $c_j$. For example, the correction unit 12 adds the numbers of the neurons corresponding to the columns in which all the weights are 0 to the list in the parameter table of the n+1 layer and obtains $\{c_j\}$.

Next, in step S44, the correction unit 12 sets j to 1. Next, in step S45, the correction unit 12 determines whether j exceeds the maximum value $C_n$ of the numbers of the neurons included in the list $\{c_j\}$. In a case where j does not exceed $C_n$, the process moves to step S46. In step S46, the correction unit 12 sets i to 1. Next, in step S47, the correction unit 12 determines whether i exceeds $I_{n-1}$. In a case where i does not exceed $I_{n-1}$, the process moves to step S49.

In step S49, the correction unit 12 deletes the input weight from the ith neuron in the (n-1)th layer to the jth neuron in the nth layer. For example, the correction unit 12 corrects the weight $w_{i,c\_j}^{(n)}$ stored in the parameter table of the nth layers to 0. Thus, both the input weight and the output weight of the jth neuron in the nth layer are 0.

Next, in step S50, the correction unit 12 increments i by one, and the process returns to step S47. In a case where i exceeds $I_{n-1}$ in step S47, the process moves to step S51. In step S51, the correction unit 12 increments j by one, and the process returns to step S45. In a case where j exceeds $C_n$ in step S45, the process moves to step S52. In step S52, the correction unit 12 decrements n by one, and the process returns to step S42. In step S42, in a case where n becomes smaller than two, the backward weight correction process ends, and the processing returns to the model reduction process (FIG. 9).

In a case where there is no coupling relationship between the ith neuron in the (n-1)th layer and the jth neuron in the nth layer, the processing in step S49 described above is skipped. In a case where j is not included in the list $\{c_j\}$, for example, in a case where any of the output weights of the jth neuron in the nth layer is not 0, the processing in steps S47 to S50 described above is skipped. Then, in step S51 described above, the correction unit 12 may increment j by one, and the process may return to step S45.

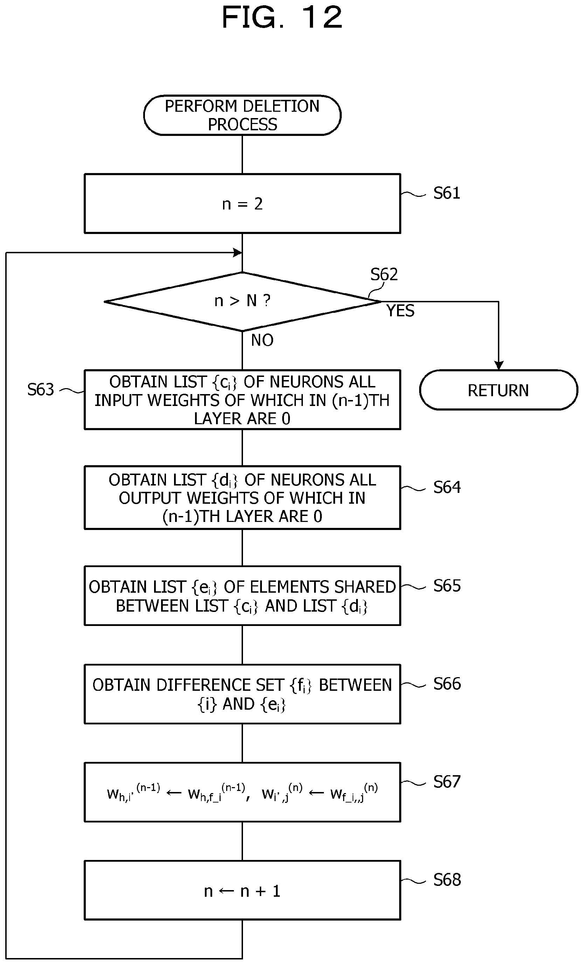

Next, the deletion process will be described with reference to FIG. 12.

In step S61, the deletion unit 16 sets the variable n that identifies a hierarchical layer to be processed in the neural network to 2. Next, in step S62, the deletion unit 16 determines whether n exceeds N representing the number of hierarchical layers of the neural network. In a case where n does not exceed N, the process proceeds to step S63.

In step S63, the deletion unit 16 obtains the list $\{c_i\}$ of the neurons all the input weights of which are 0 out of the neurons in the (n-1)th layer. For example, the deletion unit 16 adds the numbers of the neurons corresponding to the rows in which all the weights are 0 to the list in the parameter table of the (n-1)th layer and obtains $\{c_i\}$. Next, in step S64, the deletion unit 16 obtains a list $\{d_i\}$ of the neurons all the output weights of which are 0 out of the neurons in the (n-1)th layer. For example, the deletion unit 16 adds the numbers of the neurons corresponding to the columns in which all the weights are 0 to the list in the parameter table of the nth layer and obtains $\{d_i\}$.

Next, in step S65, the deletion unit 16 obtains a list $\{e_i\}$ that includes elements which are shared between the list $\{c_i\}$ and the list $\{d_i\}$. For example, the list $\{e_i\}$ stores the numbers of the neurons all the input weights and all the output weights of which are 0 out of the neurons in the (n-1)th layer. Next, in step S66, the deletion unit 16 obtains a difference set $\{f_i\}$ between the list $\{e_i\}$ and a list $\{i\}$ that includes all the numbers of the neurons in the (n-1)th layer. For example, the list $\{f_i\}$ stores the numbers of the neurons that are not deletion target out of the neurons in the (n-1)th layer.

Next, in step S67, the deletion unit 16 updates so that the weight $w_{h,f\_i}^{(n-1)}$ becomes $w_{h,i}^{(n-1)}$ in the parameter table of the (n-1)th layer and updates so that the weight $w_{f\_i,j}^{(n)}$ becomes $w_{i',j}^{(n)}$ in the parameter table of the nth layer. Here, h is the numbers (h = 1,2, ...) of the neurons in the (n-2)th layer, and i' is numbers newly assigned, like 1, 2, ..., for the numbers included in $\{f_i\}$. Thus, for example, in a case where $\{f_i\} = \{1,3\}$, the third row of the parameter table of the (n-1)th layer becomes the second row of the parameter table after the deletion, and the third column of the parameter table of the nth layer is the second column of the parameter table after the deletion. For example, the rows of the parameter table of the (n-1)th layer and the columns of the parameter table of the nth layer corresponding to the neurons of the numbers included in the list $\{e_i\}$ are deleted.

Next, in step S68, the deletion unit 16 increments n by one, and the process returns to step S62. In step S62, in a case where n exceeds N, the deletion process ends, and the processing returns to the model reduction process (FIG. 9).

As described above, in the neural network, the model reduction apparatus according to the present embodiment identifies, as the deletion targets, first neurons without a coupling from the input layer and second neurons without a coupling to the output layer. The model reduction apparatus compensates for the biases of the first neurons by combining the biases of the first neurons with the biases of the third neurons coupled to the first neurons on the output side. The model reduction apparatus deletes the identified deletion-target neurons from the neural network. Thus, the effect of the size reduction of the machine learning model may be improved while suppressing degradation in the accuracy of the machine learning model.

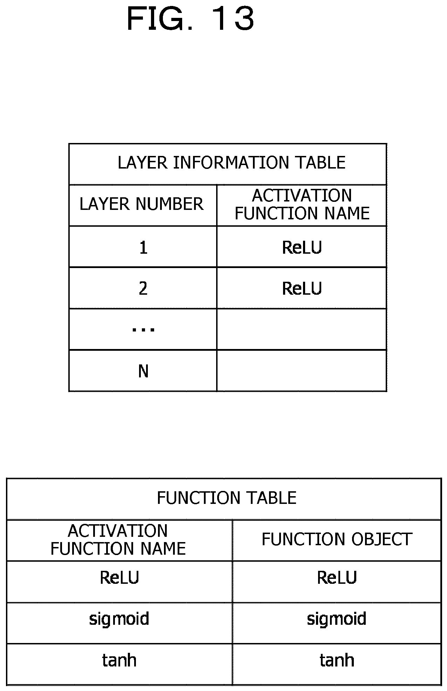

As the process of compensating for the biases of the first neurons, the case is described in which the values obtained by multiplying the biases of the first neurons by the weights between the first neurons and the third neurons are added to the biases of the third neurons according to the above-described embodiment. However, this is not limiting. For example, the values obtained by multiplying values obtained by applying activation functions of the first neurons to the biases of the first neurons by the weights between the first neurons and the third neurons may be added to the biases of the third neurons. In this case, the model reduction apparatus obtains, for example, a layer information table and a function table as illustrated in FIG. 13 together with the parameter table. In an example illustrated in FIG. 13, in the layer information table, activation function names are associated with the layer numbers so as to define the activation function names used in the respective layers. In the function table, the activation function names and function objects used for calculation of the respective activation functions are associated with each other so as to define the activation function names and the function objects. For example, when the bias of the neuron i in the (n-1)th layer is added to the neuron j in the nth layer, the compensation unit of the model reduction apparatus obtains the activation function corresponding to the (n-1)th layer from the layer information table and the function object corresponding to this activation function from the function table. The compensation unit applies the obtained function object to f described below to update the bias $b_j$ of the neuron j.

$$b_j <- b_j + w_{i,j}f(b_i)$$

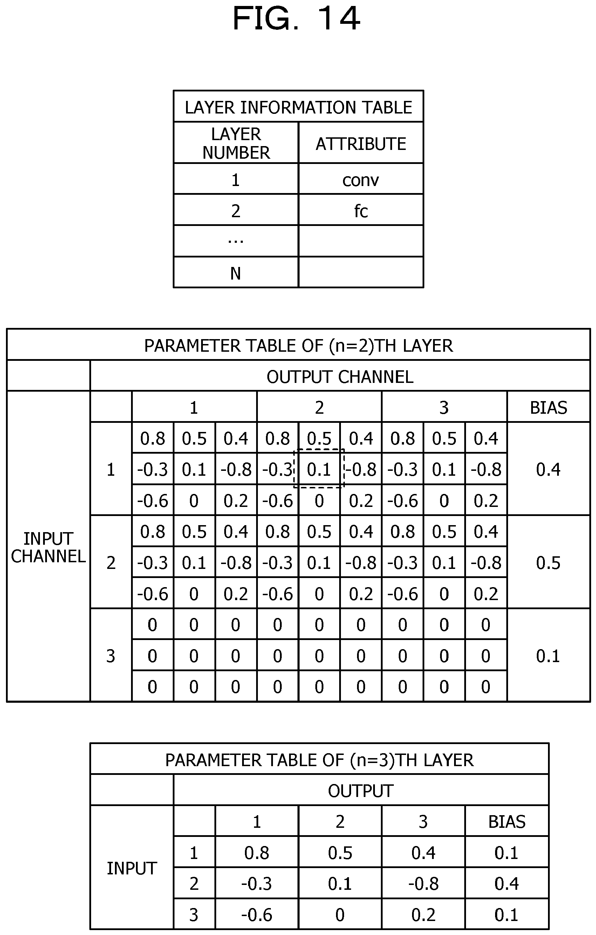

The above-described embodiment may also be applied to a neural network having a configuration including a convolution layer. In this case, the model reduction apparatus obtains, for example, a layer information table and parameter tables as illustrated in FIG. 14. In an example illustrated in FIG. 14, in the layer information table, attributes of the layers are associated with the layer numbers so as to define the attributes of the respective layers. In FIG. 14, the attribute "conv" represents a convolution layer, and the attribute "fc" represents a fully connected layer. The parameter table of each layer has a format corresponding to the attribute of the layer. The parameter table for the fc layer is similar to the parameter table described according to the above embodiment. As elements of a matrix corresponding to the neurons, weights corresponding to the filter size applied to this layer are stored in the parameter table of the convolution layer. FIG. 14 illustrates an example in which the filter size is $3 \times 3$. In this case, the weight corresponding to the element kth from the left and the lth from the top of the filter between the ith neuron in the (n-1)th layer and the jth neuron in the nth layer is represented by $w_{i,j,k,l}^{(n)}$. For example, the $w_{2,1,2,2}^{(2)}$ corresponds to an element indicated by a dashed line in the parameter table illustrated in FIG. 14.

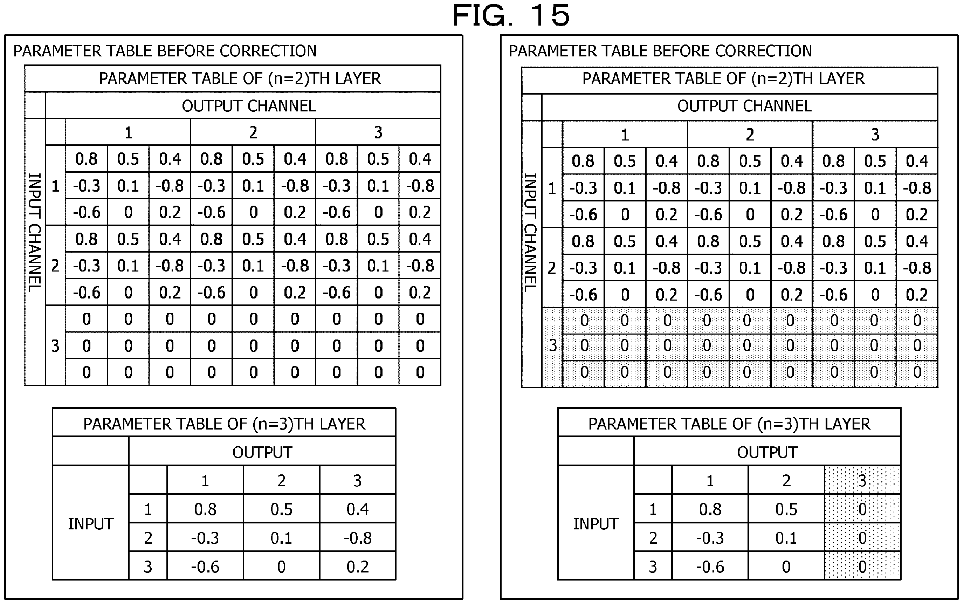

In the case of the parameter table of the convolution layer, the model reduction apparatus identifies, as the neurons the input weights and the output weights of which are 0, the neurons corresponding to rows or columns in which all the weights including the weights of the elements of the filter are 0. For example, in the case of a left section of FIG. 15, since all the input weights of the third neuron in the (n=2)th layer are 0, the correction unit of the model reduction apparatus identifies, as the deletion target, the third neuron in the (n=2)th layer. As illustrated in a right section of FIG. 15, the correction unit corrects the weights in the third column that are the output weights of the third neuron in the (n=2)th layer to 0 in the parameter table of the (n=3)th layer. The deletion unit of the model reduction apparatus deletes the third row including the $3 \times 3$ elements of the filter in the parameter table of (n=2)th layer and the third column of the parameter table of (n=3)th layer that are indicated by shaded portions in the right section of FIG. 15. In this way, the disclosed technique may reduce the size of a model even in a neural network having a configuration including a convolution layer. In FIG. 15, illustration of columns in which the bias values are stored in the parameter tables is omitted.

The case is described where the parameter table in which a subset of parameters has been deleted by using the existing model size-reduction technique is input to the model reduction apparatus according to the above-described embodiment. However, a parameter table before the model size reduction may be input. In this case, the model reduction apparatus may also have the function of the existing model size-reduction technique.

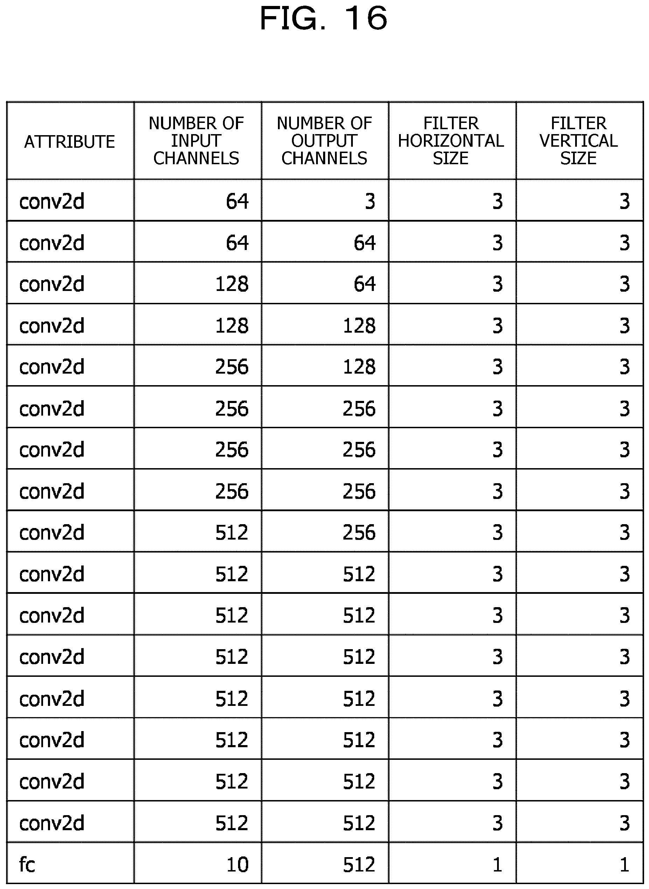

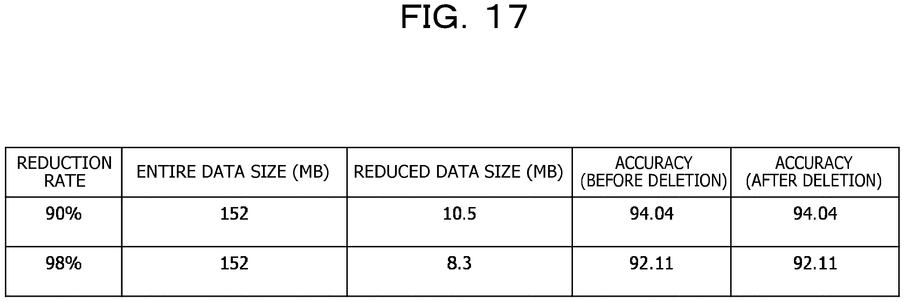

An example of the relationship between the model size-reduction rate and accuracy in the case where the disclosed technique is applied is described. Here, VGG-19-BN of VGGNet having a layer configuration as illustrated in FIG. 16 is used as the neural network, and CIFAR-10 is used as the data set. FIG. 17 illustrates accuracy of a model in a case where the size-reduction rate is 90% and accuracy of a model in a case where the size-reduction rate is 98%. An entire data size is calculated as follows: number of input channels × number of output channels × filter size × 4 × 2. In this calculation expression, "4" represents the amount of information held by a single floating-point type variable in bytes, and "2" is for doubling because a single weight parameter includes two pieces of information, weight information and gradient information. As illustrated in FIG. 17, in either case of the reduction rate, there is no change in the accuracy of the model before and after the deletion of the parameter. Thus, it is understood that the influence of the size reduction on the accuracy is su ppressed.

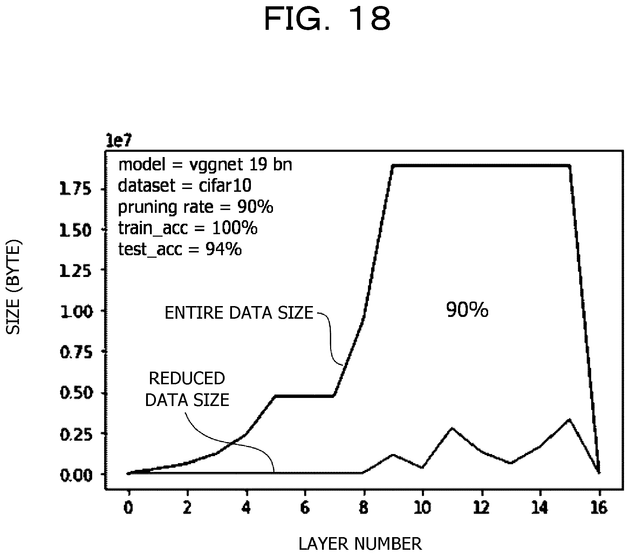

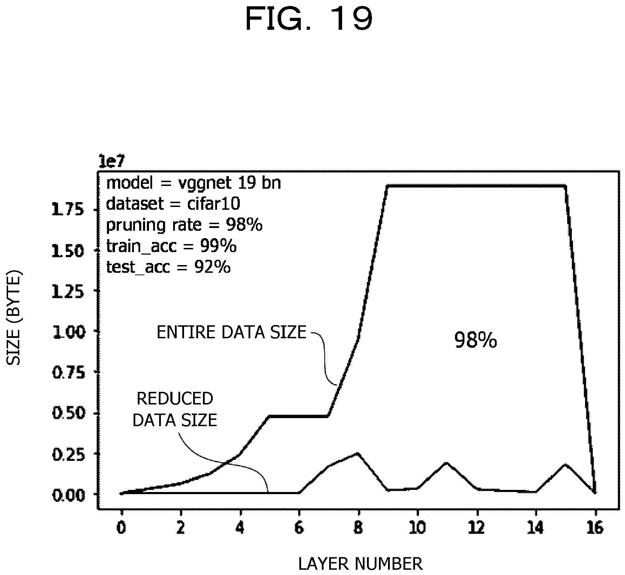

Regarding the reduced data size in each layer of the neural network in the above example, FIG. 18 illustrates a case where the reduction rate is 90%, and FIG. 19 illustrates a case where the reduction rate is 98%. In FIGs. 18 and 19, "test_acc" indicates accuracy of prediction by the neural network for test data and is similar to "ACCURACY" in FIG. 17. Also, "train_acc" is accuracy of prediction by the neural network for training data. The term "accuracy" refers to a ratio at which a value predicted by the neural network matches a correct answer.

Although a form is described in which the model reduction program is stored (installed) in advance in the storage unit according to the above embodiment, this is not limiting. The program according to the disclosed technique may be provided in a form in which the program is stored in a storage medium such as a compact disc read-only memory (CD-ROM), a Digital Versatile Disc (DVD)-ROM, or a Universal Serial Bus (USB) memory.

**Claims**

1.  A model reduction program that causes at least one computer to execute a process, the process comprising:

    identifying as deletion targets a first neuron that does not connect to an input layer in a neural network;
    identifying as deletion targets a second neuron that does not connect to an output layer in a neural network;

combining a bias of the first neuron with a bias of a third neuron connected to the first neuron on an output side; and
deleting the first neuron and the second neuron from the neural network.

2.  The model reduction program according to claim 1, wherein

    the identifying the first neuron includes correcting a weight on the output side of the first neuron to 0,
    the identifying the second neuron includes correcting a weight on an input side of the second neuron to 0, wherein
    the process further comprising
    deleting a neuron all weights of which on an input side and on an output side are 0 from the neural network.

3.  The model reduction program according to claim 2, wherein the process further comprising:

    identifying the first neuron as the deletion target in a forward search from the input layer toward the output layer in the neural network; and
    identifying the second neuron as the deletion target in a backward search from the output layer toward the input layer in the neural network.

4.  The model reduction program according to claim 2 or 3, wherein
    the identifying the first neuron and the identifying the second neuron includes correcting corresponding elements to 0 in a parameter table in which a weight between connected neurons is stored in an element of a matrix in which one of the connected neurons is assigned to a row and another of the connected neurons is assigned to a column.

5.  The model reduction program according to claim 4, wherein
    the deleting the neuron all the weights of which on the input side and on the output side are 0 includes deleting, in the parameter table, a row and a column that correspond to the weight of the neuron that is the deletion target.

6.  The model reduction program according to any one of claims 1 to 5, wherein
    the combining includes adding, to the bias of the third neuron, a value obtained by multiplying the bias of the first neuron by a weight between the first neuron and the third neuron.

7.  The model reduction program according to any one of claims 1 to 5, wherein
    the combining includes adding, to the bias of the third neuron, a value obtained by multiplying by a weight between the first neuron and the third neuron a value obtained by applying an activation function of the first neuron to the bias of the first neuron.

8. A model reduction apparatus comprising:
a specification unit that

> identifies as deletion targets a first neuron that does not connect to an input layer in a neural network, and
> identifies as deletion targets a second neuron that does not connect to an output layer in a neural network;
> a compensation unit that combines a bias of the first neuron with a bias of a third neuron connected to the first neuron on an output side; and
> a deletion unit that deletes the first neuron and the second neuron from the neural network.

9. The model reduction apparatus according to claim 8, wherein
the specification unit further:

> corrects a weight on the output side of the first neuron to 0;
> corrects a weight on an input side of the second neuron to 0,

wherein the deletion unit further deletes a neuron all weights of which on an input side and on an output side are 0 from the neural network.

10. The model reduction apparatus according to claim 9, wherein
the specification unit further:

> identifies the first neuron as the deletion target in a forward search from the input layer toward the output layer in the neural network; and
> identifies the second neuron as the deletion target in a backward search from the output layer toward the input layer in the neural network.

11. The model reduction apparatus according to claim 9 or 10, wherein
the specification unit further corrects corresponding elements to 0 in a parameter table in which a weight between connected neurons is stored in an element of a matrix in which one of the connected neurons is assigned to a row and another of the connected neurons is assigned to a column.

12. A model reduction method for a computer to execute a process comprising:

> identifying as deletion targets a first neuron that does not connect to an input layer in a neural network;
identifying as deletion targets a second neuron that does not connect to an output layer in a neural network;
combining a bias of the first neuron with a bias of a third neuron connected to the first neuron on an output side; and
deleting the first neuron and the second neuron from the neural network.

13. The model reduction method according to claim 12, wherein

> the identifying the first neuron includes correcting a weight on the output side of the first neuron to 0,
> the identifying the second neuron includes correcting a weight on an input side of the second neuron to 0, wherein
> the process further comprising
> deleting a neuron all weights of which on an input side and on an output side are 0 from the neural network.

14. The model reduction method according to claim 13, wherein the process further comprising:

> identifying the first neuron as the deletion target in a forward search from the input layer toward the output layer in the neural network; and
> identifying the second neuron as the deletion target in a backward search from the output layer toward the input layer in the neural network.

15. The model reduction method according to claim 13 or 14, wherein the identifying the first neuron and the identifying the second neuron includes correcting corresponding elements to 0 in a parameter table in which a weight between connected neurons is stored in an element of a matrix in which one of the connected neurons is assigned to a row and another of the connected neurons is assigned to a column.

# FIG. 1

PARAMETER TABLE

10

12
CORRECTION UNIT

14
COMPENSATION UNIT

16
DELETION UNIT

PARAMETER TABLE AFTER
REDUCTION

# FIG. 2

APPLY THRESHOLD
TO PARAMETER

REMOVE UNWANTED
PARAMETER

# FIG. 3

# FIG. 4

(n-1)TH LAYER $\quad$ i

$w_{i,j}^{(n)}$

nTH LAYER $\quad$ j

# FIG. 5

**PARAMETER TABLE OF (n=2)TH LAYER**

| | | OUTPUT | | |
|---|---|---|---|---|
| | | A | B | BIAS |
| INPUT | C | $w_{A,C}^{(2)}$ | $w_{B,C}^{(2)}$ | $b_C$ |
| | D | $w_{A,D}^{(2)}$ | $w_{B,D}^{(2)}$ | $b_D$ |
| | E | $w_{A,E}^{(2)}$ | $w_{B,E}^{(2)}$ | $b_E$ |

**PARAMETER TABLE OF (n=3)TH LAYER**

| | | OUTPUT | | | |
|---|---|---|---|---|---|
| | | C | D | E | BIAS |
| INPUT | F | $w_{C,F}^{(3)}$ | $w_{D,F}^{(3)}$ | $w_{E,F}^{(3)}$ | $b_F$ |
| | G | $w_{C,G}^{(3)}$ | $w_{D,G}^{(3)}$ | $w_{E,G}^{(3)}$ | $b_G$ |

# FIG. 6

FROM INPUT LAYER

BACKWARD SEARCH

OUTPUT LAYER

FORWARD SEARCH

n=1

n=2

n=3

n=4

# FIG. 7

PARAMETER TABLE
AFTER IDENTIFICATION
OF DELETION TARGET

n = 1 (A) (B)

n = 2 (C) (D) (E)

n = 3 (F) (G)

| PARAMETER TABLE OF (n=2)TH LAYER | | | | |
|---|---|---|---|---|
| | | OUTPUT | | |
| | | A | B | BIAS |
| INPUT | C | 0.8 | 0.5 | $b_C$ |
| | D | 0 | 0 | $b_D$ |
| | E | -0.6 | 0 | $b_E$ |

| PARAMETER TABLE OF (n=3)TH LAYER | | | | | |
|---|---|---|---|---|---|
| | | OUTPUT | | | |
| | | C | D | E | BIAS |
| INPUT | F | 0.8 | 0 | 0.4 | $b_F$ |
| | G | -0.3 | 0 | -0.8 | $b_G$ |

PARAMETER TABLE
AFTER DELETION OF
ROW AND COLUMN

n = 1 (A) (B)

n = 2 (C) (E)

n = 3 (F) (G)

| PARAMETER TABLE OF (n=2)TH LAYER | | | | |
|---|---|---|---|---|
| | | OUTPUT | | |
| | | A | B | BIAS |
| INPUT | C | 0.8 | 0.5 | $b_C$ |
| | E | -0.6 | 0 | $b_E$ |

| PARAMETER TABLE OF (n=3)TH LAYER | | | | |
|---|---|---|---|---|
| | | OUTPUT | | |
| | | C | E | BIAS |
| INPUT | F | 0.8 | 0.4 | $b_F$ |
| | G | -0.3 | -0.8 | $b_G$ |

EP 4 187 443 A1

# FIG. 8

```
    41              44              49  45              46
    ┌─────┐   ┌──────────────┐   ○   ┌──────────┐   ┌──────────────┐
    │ CPU │   │ INPUT/OUTPUT │   │   │ R/W UNIT │   │COMMUNICATION │
    │     │   │    DEVICE    │   ▼   │          │   │     I/F      │
    └─────┘   └──────────────┘       └──────────┘   └──────────────┘
```

40

47

STORAGE UNIT          50          MEMORY

MODEL REDUCTION PROGRAM

CORRECTION PROCESS                          52

COMPENSATION PROCESS                        54

DELETION PROCESS                            56

43                                          42

# FIG. 9

```
        ┌─────────────────┐
        │      START      │
        └─────────────────┘
                 │
   ┌─────────────────────────────┐
   │    OBTAIN PARAMETER TABLE    │ ～ S10
   └─────────────────────────────┘
                 │
   ┌─────────────────────────────┐
   │    PERFORM FORWARD WEIGHT    │ ～ S20
   │      CORRECTION PROCESS      │
   └─────────────────────────────┘
                 │
   ┌─────────────────────────────┐
   │   PERFORM BACKWARD WEIGHT    │ ～ S40
   │      CORRECTION PROCESS      │
   └─────────────────────────────┘
                 │
   ┌─────────────────────────────┐
   │   PERFORM DELETION PROCESS   │ ～ S60
   └─────────────────────────────┘
                 │
        ┌─────────────────┐
        │       END       │
        └─────────────────┘
```

# FIG. 10

PERFORM FORWARD WEIGHT
CORRECTION PROCESS

$n = 2$ — S21

$n > N$ ? — S22 — YES → RETURN

NO

S23 — OBTAIN LIST $\{c_i\}$ OF NEURONS ALL INPUT WEIGHTS OF WHICH IN (n-1)TH LAYER ARE 0

S24 — $i = 1$

$i > C_{n-1}$ ? — S25 — YES

NO

$j = 1$ — S26

$j > J_n$ ? — S27 — YES

NO

$b_j \leftarrow b_j + w_{c\_i,j}^{(n)} b_i$ — S28

$w_{c\_i,j}^{(n)} = 0$ — S29

$j \leftarrow j + 1$ — S30

$i \leftarrow i + 1$ — S31

$n \leftarrow n + 1$ — S32

# FIG. 11

PERFORM BACKWARD WEIGHT
CORRECTION PROCESS

n = N-1 — S41

S42

n < 2 ? — YES

NO

S43 — OBTAIN LIST $\{c_j\}$ OF NEURONS ALL
OUTPUT WEIGHTS OF WHICH IN nTH
LAYER ARE 0

RETURN

S44 — j = 1

S45

j > $C_n$ ? — YES

NO

i = 1 — S46

S47

i > $I_{n-1}$ ? — YES

NO

$w_{i,c\_j}^{(n)} = 0$ — S49

i ← i + 1 — S50

j ← j + 1 — S51

n ← n - 1 — S52

# FIG. 12

PERFORM DELETION
PROCESS

n = 2 — S61

S62
n > N ?
YES
NO

RETURN

S63 — OBTAIN LIST $\{c_i\}$ OF NEURONS ALL INPUT WEIGHTS OF WHICH IN (n-1)TH LAYER ARE 0

OBTAIN LIST $\{d_i\}$ OF NEURONS ALL OUTPUT WEIGHTS OF WHICH IN (n-1)TH LAYER ARE 0 — S64

OBTAIN LIST $\{e_i\}$ OF ELEMENTS SHARED BETWEEN LIST $\{c_i\}$ AND LIST $\{d_i\}$ — S65

OBTAIN DIFFERENCE SET $\{f_i\}$ BETWEEN $\{i\}$ AND $\{e_i\}$ — S66

$W_{h,i'}^{(n-1)} \leftarrow W_{h,f\_i}^{(n-1)}, \quad W_{i',j}^{(n)} \leftarrow W_{f\_i,,j}^{(n)}$ — S67

$n \leftarrow n + 1$ — S68

# FIG. 13

| LAYER INFORMATION TABLE | |
|---|---|
| LAYER NUMBER | ACTIVATION FUNCTION NAME |
| 1 | ReLU |
| 2 | ReLU |
| ... | |
| N | |

| FUNCTION TABLE | |
|---|---|
| ACTIVATION FUNCTION NAME | FUNCTION OBJECT |
| ReLU | ReLU |
| sigmoid | sigmoid |
| tanh | tanh |

# FIG. 14

| LAYER INFORMATION TABLE | |
|---|---|
| LAYER NUMBER | ATTRIBUTE |
| 1 | conv |
| 2 | fc |
| ... | |
| N | |

| PARAMETER TABLE OF (n=2)TH LAYER | | | | | | | | | | | |
|---|---|---|---|---|---|---|---|---|---|---|---|
| | | OUTPUT CHANNEL | | | | | | | | | |
| | | 1 | | | 2 | | | 3 | | | BIAS |
| INPUT CHANNEL | 1 | 0.8 | 0.5 | 0.4 | 0.8 | 0.5 | 0.4 | 0.8 | 0.5 | 0.4 | 0.4 |
| | | -0.3 | 0.1 | -0.8 | -0.3 | 0.1 | -0.8 | -0.3 | 0.1 | -0.8 | |
| | | -0.6 | 0 | 0.2 | -0.6 | 0 | 0.2 | -0.6 | 0 | 0.2 | |
| | 2 | 0.8 | 0.5 | 0.4 | 0.8 | 0.5 | 0.4 | 0.8 | 0.5 | 0.4 | 0.5 |
| | | -0.3 | 0.1 | -0.8 | -0.3 | 0.1 | -0.8 | -0.3 | 0.1 | -0.8 | |
| | | -0.6 | 0 | 0.2 | -0.6 | 0 | 0.2 | -0.6 | 0 | 0.2 | |
| | 3 | 0 | 0 | 0 | 0 | 0 | 0 | 0 | 0 | 0 | 0.1 |
| | | 0 | 0 | 0 | 0 | 0 | 0 | 0 | 0 | 0 | |
| | | 0 | 0 | 0 | 0 | 0 | 0 | 0 | 0 | 0 | |

| PARAMETER TABLE OF (n=3)TH LAYER | | | | | |
|---|---|---|---|---|---|
| | | OUTPUT | | | |
| | | 1 | 2 | 3 | BIAS |
| INPUT | 1 | 0.8 | 0.5 | 0.4 | 0.1 |
| | 2 | -0.3 | 0.1 | -0.8 | 0.4 |
| | 3 | -0.6 | 0 | 0.2 | 0.1 |

# FIG. 15

PARAMETER TABLE BEFORE CORRECTION

**PARAMETER TABLE BEFORE CORRECTION**

### PARAMETER TABLE OF (n=2)TH LAYER

| INPUT CHANNEL | | OUTPUT CHANNEL | | | | | | | | |
|---|---|---|---|---|---|---|---|---|---|---|
| | | 1 | | | 2 | | | 3 | | |
| | 1 | 0.8 | 0.5 | 0.4 | 0.8 | 0.5 | 0.4 | 0.8 | 0.5 | 0.4 |
| | | -0.3 | 0.1 | -0.8 | -0.3 | 0.1 | -0.8 | -0.3 | 0.1 | -0.8 |
| | | -0.6 | 0 | 0.2 | -0.6 | 0 | 0.2 | -0.6 | 0 | 0.2 |
| | 2 | 0.8 | 0.5 | 0.4 | 0.8 | 0.5 | 0.4 | 0.8 | 0.5 | 0.4 |
| | | -0.3 | 0.1 | -0.8 | -0.3 | 0.1 | -0.8 | -0.3 | 0.1 | -0.8 |
| | | -0.6 | 0 | 0.2 | -0.6 | 0 | 0.2 | -0.6 | 0 | 0.2 |
| | 3 | 0 | 0 | 0 | 0 | 0 | 0 | 0 | 0 | 0 |
| | | 0 | 0 | 0 | 0 | 0 | 0 | 0 | 0 | 0 |
| | | 0 | 0 | 0 | 0 | 0 | 0 | 0 | 0 | 0 |

### PARAMETER TABLE OF (n=3)TH LAYER

| | | OUTPUT | | |
|---|---|---|---|---|
| | | 1 | 2 | 3 |
| INPUT | 1 | 0.8 | 0.5 | 0.4 |
| | 2 | -0.3 | 0.1 | -0.8 |
| | 3 | -0.6 | 0 | 0.2 |

**PARAMETER TABLE BEFORE CORRECTION**

### PARAMETER TABLE OF (n=2)TH LAYER

| INPUT CHANNEL | | OUTPUT CHANNEL | | | | | | | | |
|---|---|---|---|---|---|---|---|---|---|---|
| | | 1 | | | 2 | | | 3 | | |
| | 1 | 0.8 | 0.5 | 0.4 | 0.8 | 0.5 | 0.4 | 0.8 | 0.5 | 0.4 |
| | | -0.3 | 0.1 | -0.8 | -0.3 | 0.1 | -0.8 | -0.3 | 0.1 | -0.8 |
| | | -0.6 | 0 | 0.2 | -0.6 | 0 | 0.2 | -0.6 | 0 | 0.2 |
| | 2 | 0.8 | 0.5 | 0.4 | 0.8 | 0.5 | 0.4 | 0.8 | 0.5 | 0.4 |
| | | -0.3 | 0.1 | -0.8 | -0.3 | 0.1 | -0.8 | -0.3 | 0.1 | -0.8 |
| | | -0.6 | 0 | 0.2 | -0.6 | 0 | 0.2 | -0.6 | 0 | 0.2 |
| | 3 | 0 | 0 | 0 | 0 | 0 | 0 | 0 | 0 | 0 |
| | | 0 | 0 | 0 | 0 | 0 | 0 | 0 | 0 | 0 |
| | | 0 | 0 | 0 | 0 | 0 | 0 | 0 | 0 | 0 |

### PARAMETER TABLE OF (n=3)TH LAYER

| | | OUTPUT | | |
|---|---|---|---|---|
| | | 1 | 2 | 3 |
| INPUT | 1 | 0.8 | 0.5 | 0 |
| | 2 | -0.3 | 0.1 | 0 |
| | 3 | -0.6 | 0 | 0 |

EP 4 187 443 A1

# FIG. 16

| ATTRIBUTE | NUMBER OF INPUT CHANNELS | NUMBER OF OUTPUT CHANNELS | FILTER HORIZONTAL SIZE | FILTER VERTICAL SIZE |
|---|---|---|---|---|
| conv2d | 64 | 3 | 3 | 3 |
| conv2d | 64 | 64 | 3 | 3 |
| conv2d | 128 | 64 | 3 | 3 |
| conv2d | 128 | 128 | 3 | 3 |
| conv2d | 256 | 128 | 3 | 3 |
| conv2d | 256 | 256 | 3 | 3 |
| conv2d | 256 | 256 | 3 | 3 |
| conv2d | 256 | 256 | 3 | 3 |
| conv2d | 512 | 256 | 3 | 3 |
| conv2d | 512 | 512 | 3 | 3 |
| conv2d | 512 | 512 | 3 | 3 |
| conv2d | 512 | 512 | 3 | 3 |
| conv2d | 512 | 512 | 3 | 3 |
| conv2d | 512 | 512 | 3 | 3 |
| conv2d | 512 | 512 | 3 | 3 |
| conv2d | 512 | 512 | 3 | 3 |
| fc | 10 | 512 | 1 | 1 |

# FIG. 17

EP 4 187 443 A1

| REDUCTION RATE | ENTIRE DATA SIZE (MB) | REDUCED DATA SIZE (MB) | ACCURACY (BEFORE DELETION) | ACCURACY (AFTER DELETION) |
|---|---|---|---|---|
| 90% | 152 | 10.5 | 94.04 | 94.04 |
| 98% | 152 | 8.3 | 92.11 | 92.11 |

# FIG. 18

# FIG. 19

Europäisches
Patentamt
European
Patent Office
Office européen
des brevets

# EUROPEAN SEARCH REPORT

Application Number

EP 22 19 0752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOUYANG XIE ET AL: "Pruning with Compensation: Efficient Channel Pruning for Deep Convolutional Neural Networks", ARXIV.ORG, CORNELL UNIVERSITY LIBRARY, 201 OLIN LIBRARY CORNELL UNIVERSITY ITHACA, NY 14853, 31 August 2021 (2021-08-31), XP091041405, * Text bellow Equation (5); page 5, right-hand column * | 1-15 | INV. G06N3/0495 G06N3/082 |
| X | ARJPOLSON PUKRITTAYAKAMEE ET AL: "A network pruning algorithm for combined function and derivative approximation", NEURAL NETWORKS, 2009. IJCNN 2009. INTERNATIONAL JOINT CONFERENCE ON, IEEE, PISCATAWAY, NJ, USA, 14 June 2009 (2009-06-14), pages 2553-2560, XP031498269, ISBN: 978-1-4244-3548-7 * Section IV. Pruning Algorithm; page 2557, left-hand column - right-hand column; figure 8 * | 1-15 | |
| A | DENG BY LEI ET AL: "Model Compression and Hardware Acceleration for Neural Networks: A Comprehensive Survey", PROCEEDINGS OF THE IEEE, IEEE. NEW YORK, US, vol. 108, no. 4, 20 March 2020 (2020-03-20), pages 485-532, XP011782925, ISSN: 0018-9219, DOI: 10.1109/JPROC.2020.2976475 [retrieved on 2020-04-10] * figure 3 * * figure 17 * | 1-15 | TECHNICAL FIELDS SEARCHED (IPC)<br><br>G06N |

The present search report has been drawn up for all claims

| Place of search | Date of completion of the search | Examiner |
|---|---|---|
| The Hague | 13 April 2023 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000322263 A